# EUROPEAN PATENT SPECIFICATION

(11) **EP 2 466 095 B1**
(45) Date of publication and mention of the grant of the patent: **04.03.2015**
(21) Application number: 11192175.5
(22) Date of filing: 06.12.2011
(51) Int. Cl.: G01N 25/48, G01K 17/04, F02C 7/045, G01N 25/02

(54) **An acoustic liner**
Schalldämpfende Auskleidung
Revêtement acoustique

(30) Priority: 15.12.2010 GB 201021265
(43) Date of publication of application: 20.06.2012
(73) Proprietor: Rolls-Royce plc, London SW1E 6AT (GB)
(72) Inventor: Murray, Paul, Horsham, Surrey RH12 1RP (GB); Astley, Richard, Southampton, Hampshire SO17 1NY (GB); Sugimoto, Rie, Southampton, Hampshire SO15 5JD (GB); Kempton, Andrew, Derby, Derbyshire DE72 2HA (GB)
(74) Representative: Gee, Philip David

(56) References cited:
- EP-A2- 1 482 478
- GB-A- 2 090 334
- US-A1- 2010 284 790

## Description

This invention relates to gas turbine engines. In particular, it relates to acoustic liners, such as those used in fan casings of gas turbine engines to reduce noise and vibration.

Many current gas turbine engines, particularly for aerospace use, comprise an engine core and a ducted fan which is driven by a turbine of the engine core. The ducted fan comprises a fan rotor having an array of fan blades which rotate within a duct surrounding the fan rotor, to provide a substantial part of the thrust generated by the engine.

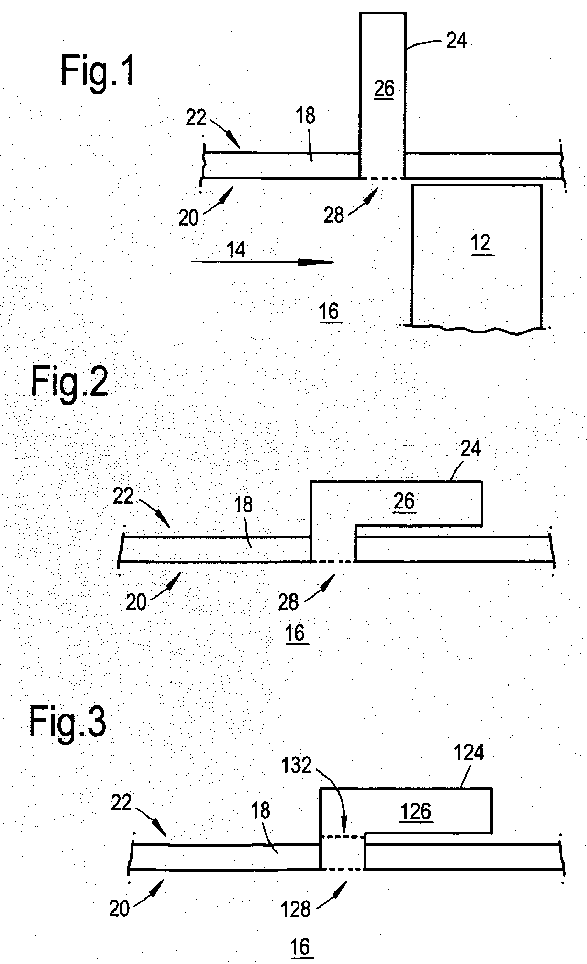

It is known to provide measures in the fan casing to reduce the noise generated by the fan in operation. Aircraft engine fan noise may occur at frequencies as low as 50 Hz or as high as 10 kHz. It is known to provide acoustic liners in the duct to attenuate the fan noise, comprising resistive layers (otherwise known as septums) above cavities. Typical configurations consist of one or more resistive layers, backed respectively by one or more honeycomb cavities. Those with one resistive layer and one honeycomb layer are known as single layer liners, while those with two resistive layers (one facing sheet and one septum) are known as double layer liners. Further resistive layers and honeycomb layers may also be added, These liners are typically sized to attenuate sound from approximately 500Hz to 10kHz (i.e. those frequencies which contribute most to community noise), and have typical overall depths (in the radial direction when installed) between 5mm and 50mm. To target frequencies below about 500Hz, the liner depth must increase, but deeper liners can be difficult or impossible to accommodate within the nacelle cowling. A schematic illustration of such a liner is shown in Figure 1. Fan blades 12 (only one shown) of a gas turbine engine rotate in a gas flow 14 in a duct 16. The rotational axis of the blades 12 is not shown, but lies below Figure 1 and parallel with arrow 14.

The duct 16 is defined by an annular fan casing 18, which has an inner wall 20 which is washed by the gas flow 14 and an outer wall 22 which is a structural casing. A plurality of acoustic liners 24 (only one shown) are secured circumferentially around the casing 18. The illustrated liner 24 comprises a radially-extending cavity 26 and a perforate facing sheet 28. The cavity 26 is therefore in fluid communication with the duct 16. The liner parameters are selected to provide an optimised impedance match to that for maximum duct attenuation at the principal target frequencies and duct flow and sound pressure spectral conditions. Liner parameters are designed using a series of semi-empirical formulae which relate the liner construction to the liner surface impedance. One such formula, for example, is that the liner depth should be of the order of a quarter of the wavelength of the target frequency.

For lower target frequencies, it is known to provide acoustic liners in which the cavities are L-shaped rather than straight, and such liners are commonly referred to as "folded" liners. The advantage of a folded liner is that it requires less radial depth in the engine nacelle, and therefore aids installation in what is typically a restricted space. Figure 2 is a schematic illustration of such a folded liner. A disadvantage of such liners is that because they are optimised for a low target frequency their attenuation at higher frequencies is inferior.

Typically, if dedicated low frequency liner configurations are installed in aircraft engine nacelle ducts, they occupy space previously assigned to community noise liners, and therefore their presence degrades the attainable level of community noise attenuation. Dedicated low frequency liners are also typically heavier and more expensive than community noise liners. The present invention therefore seeks to provide a novel low frequency acoustic liner that provides significant attenuation also at high frequencies, thereby increasing the overall attenuation efficiency of the lined duct.

Poor mid- to high-frequency performance is a characteristic of both straight and folded cavities. This is a result of the presence of multiple frequencies in the spectral range of interest, where attenuation is at a minimum. Folded cavities provide more scope for improved high frequency performance given the tendency for an additional tuned direct reflection, at the fold, from the more directional high-frequency sound.

EP 1 482 478 A2 discloses an assembly for reducing aircraft engine noise that comprises a core portion having at least one entrance end and at least one exit end for the passage of acoustic energy therethrough. The core portion may be a honeycomb acoustic structure.

The invention provides additional mid- to high-frequency attenuation from folded cavities, realised via the addition of a resistive septum inside the cavity. The septum resistance and position is chosen to attain the optimum impedance match over the complete low and high frequency target frequency range and spectral content.

According to the invention, there is provided an acoustic liner for a gas turbine engine as set out in the claims.

The invention will now be described, by way of example only, with reference to the accompanying drawings in which:
Figure 1 shows a schematic circumferential view of a conventional deep low frequency acoustic liner;
Figure 2 shows a schematic circumferential view of a conventional folded cavity low frequency acoustic liner;
Figure 3 shows a schematic circumferential view of an acoustic liner according to the invention; and
Figure 4 shows a schematic circumferential view of a specific embodiment of an acoustic liner according to the invention.

Referring first to Figure 3, a folded cavity liner 124 is installed in a casing 18 of a gas turbine engine. The liner 124 comprises a cavity 126 and a resistive facing sheet (perforate or wire-mesh-on-perforate) 128 covering an opening to the cavity 126.

The liner further comprises a perforate septum 132, in this embodiment located immediately before the bend in the liner. The impedance of the septum 132 may be different from the impedance of the facing sheet 128.

The inventors have discovered that the presence of the septum 132 in the liner 124 permits the attenuation of noise over a much wider range of frequencies than in known liners. By suitable choice of the impedance (resistance and reactance) of the septum 132 and of its position in the cavity 126, the liner can provide low frequency attenuation comparable with known liners while also providing improved attenuation at higher frequencies, when compared with the performance of conventional low frequency deep straight cavity or folded cavity liners.

In particular preferred embodiments of the invention, the resistance of the facing sheet is in the range 0.2-1 ρc and the resistance of the septum is in the range 1-2 ρc. It is envisaged that the benefits of the invention can substantially be achieved with facing sheet resistances in the range 0.1-4 ρc and with septum resistances in the range 1-3 ρc. The expression ρc represents the characteristic impedance of the air, where ρ is the density of the air and c is the speed of sound in it. For the purposes of defining liner properties, pc may be considered to be constant, and is generally calculated at ICAO standard atmosphere conditions.

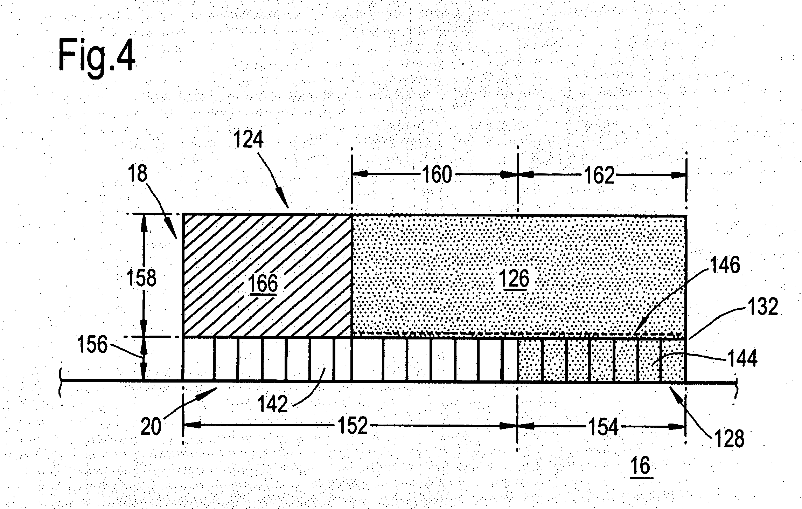

Figure 4 shows a specific embodiment of an acoustic liner according to the invention. Some features are the same as corresponding features in Figure 3, and these have been given the same reference numbers.

As in Figure 3, a folded cavity liner 124 is installed in a casing 18 of a gas turbine engine. The liner 124 comprises a cavity 126 and a resistive facing sheet (perforate or wire-mesh-on-perforate) 128.

The liner further comprises a perforate septum 132, in this embodiment located immediately before the bend in the liner. By "before" is meant that the septum is located on the "duct" side of the bend, rather than on the "cavity" side of the bend. The septum comprises a mesh layer 146, which for convenience of manufacture extends along the whole length of the cavity 126.

In this embodiment, the wall 20 of the duct 18 comprises a single layer liner 142 of conventional design, comprising a honeycomb layer with a resistive facing sheet 128. (In other embodiments this liner may be absent.) To provide fluid communication between the duct 18 and the cavity 126, an opening is provided over the region 154. This may (as shown in Figure 4) have an open honeycomb layer 144, or may be covered only by the facing sheet 128. In this embodiment, the dimension 154 is 5cm and the dimension 152 is 10cm. The thickness 156 of the single layer liner is 1.5cm. The radial depth 158 of the cavity 126 is 5cm, and its length (160 + 162) is 10cm. The dimensions 160 and 162 are each 5cm. The region 166 is dead space, and is not in fluid communication with any other part of the assembly.

In practice, a number of folded cavity liners 124 would be arranged circumferentially around the annulus of the fan casing 18. In the embodiment shown in Figure 4, each liner 124 has a circumferential width (in the direction into and out of the paper in Figure 4) of 5cm.

Although the invention has been described by reference to certain specific embodiments, it will be understood that variations and alternatives may be employed in other embodiments without departing from the scope of the invention.

The impedance and location of the septum 132 may be varied to target specific frequency ranges.

The septum 132 may be made of a perforate, or of a metal or non-metal mesh.

One or more additional septums may be added in different positions in the cavity, to provide more degrees of freedom to the optimisation of the overall design.

A highly open mesh layer 146, or other perforate support sheet, may be combined with a resistive septum 132, so that the support sheet will provide structural continuity and the overall septum impedance will control the acoustic behaviour.

## Claims

1. An acoustic liner (124) for a gas turbine engine, comprising a folded cavity (126) with an opening and a resistive facing sheet (128) covering the opening, wherein the folded cavity has a single bend which turns the cavity through about 90 degrees and further comprises a resistive septum (132) inside the cavity that increases attenuation at high frequencies, the resistive septum having a resistance of between 1 and 3 ρc.

2. An acoustic liner as claimed in claim 1, in which the septum is located immediately before the bend.

3. An acoustic liner as claimed in claim 1 or claim 2, in which the facing sheet has a resistance of between 0.1 and 4 ρc.

4. An acoustic liner as claimed in any one of the preceding claims, in which the facing sheet has a resistance of between 0.2 and 1 ρc.

5. An acoustic liner as claimed in any preceding claim, in which the septum has a resistance of between 1 and 2 ρc.

6. An acoustic liner as claimed in any preceding claim, and further comprising a honeycomb layer (144) in the opening.

7. A casing arrangement for a gas turbine engine, comprising a plurality of acoustic liners as claimed in any preceding claim.

8. A gas turbine engine comprising a casing arrangement as claimed in claim 7.

## Patentansprüche

1. Eine Schallauskleidung (124) für einen Gasturbinenmotor, umfassend einen gefalteten Hohlraum (126) mit einer Öffnung und ein widerstandsfähiges, die Öffnung abdeckendes Blechprofil (128), wobei der gefaltete Hohlraum eine einmalige Biegung aufweist, welche den Hohlraum um rund 90 Grad dreht und ferner ein widerstandsfähiges Septum (132) innerhalb des Hohlraums umfasst, das die Dämpfung bei hohen Frequenzen erhöht, wobei das widerstandsfähige Septum einen Widerstand zwischen 1 und 3 ρc aufweist.

2. Eine Schallauskleidung nach Anspruch 1, in der das Septum sich unmittelbar vor der Biegung befindet.

3. Eine Schallauskleidung nach Anspruch 1 oder Anspruch 2, in der das Blechprofil einen Widerstand zwischen 0,1 und 4 ρc aufweist.

4. Eine Schallauskleidung nach einem der vorstehenden Ansprüche, in der das Blechprofil einen Widerstand zwischen 0,2 und 1 ρc aufweist.

5. Eine Schallauskleidung nach einem der vorstehenden Ansprüche, in der das Septum einen Widerstand zwischen 1 und 2 ρc aufweist.

6. Eine Schallauskleidung nach einem der vorstehenden Ansprüche, und ferner umfassend eine Wabenlage (144) in der Öffnung.

7. Eine Gehäuseanordnung für einen Gasturbinenmotor, umfassend eine Vielzahl von Schallauskleidungen nach einem der vorstehenden Ansprüche.

8. Ein Gasturbinenmotor, umfassend eine Gehäuseanordnung nach Anspruch 7.

## Revendications

1. Revêtement acoustique (124) pour moteur de turbine à gaz, comprenant une cavité repliée (126) avec une ouverture et une feuille de garniture résistive (128) recouvrant l'ouverture, où la cavité repliée présente un simple coude qui retourne la cavité d'environ 90 degrés et comprend en outre une cloison résistive (132) à l'intérieur de la cavité qui augmente l'atténuation à hautes fréquences, la cloison résistive ayant une résistance comprise entre 1 et 3 pc.

2. Revêtement acoustique selon la revendication 1, dans lequel la cloison est située juste avant le coude.

3. Revêtement acoustique selon la revendication 1 ou la revendication 2, dans lequel la feuille de garniture a une résistance comprise entre 0,1 et 4 pc.

4. Revêtement acoustique selon l'une quelconque des revendications précédentes, dans lequel la feuille de garniture a une résistance comprise entre 0,2 et 1 pc.

5. Revêtement acoustique selon l'une quelconque des revendications précédentes, dans lequel la cloison a une résistance comprise entre 1 et 2 pc.

6. Revêtement acoustique selon l'une quelconque des revendications précédentes, et comprenant en outre une couche alvéolaire (144) dans l'ouverture.

7. Agencement de boîtier pour moteur de turbine à gaz, comprenant une pluralité de revêtement acoustiques selon l'une quelconque des revendications précédentes.

8. Moteur de turbine à gaz comprenant un agencement de boîtier selon la revendication 7.
